# EUROPÄISCHE PATENTANMELDUNG

(11) **EP 0 572 998 A2**
(43) Veröffentlichungstag der Anmeldung: **08.12.1993**
(21) Anmeldenummer: 93108840.5
(22) Anmeldetag: 02.06.1993
(51) Int. Cl.: G01N 1/02, C02F 1/40, F17D 3/16, B01D 45/06, G01N 1/10, G01N 1/22

(54) **Verfahren und Vorrichtung zur Trennung von Schwebestoffen in strömenden Fluiden**

(30) Priorität: 04.06.1992 DE 4218379
(71) Anmelder: Tillich, Dirk, W-38100 Braunschweig (DE)
(72) Erfinder: Tillich, Dirk, W-38100 Braunschweig (DE)
(74) Vertreter: Gramm, Werner, Prof., Dipl.-Ing.

(57) **Zusammenfassung**

Die Erfindung betrifft ein Verfahren sowie eine Vorrichtung zur Trennung von Schwebestoffen in strömenden Fluiden zur Erzeugung eines gereinigten, zumindest schwebestoffarmen Teil-Fluidstroms. Um kontinuierlich einen schwebestoffarmen Teil-Fluidstrom aus dem verunreinigten Fluidstrom abtrennen zu können, wird erfindungsgemäß vorgeschlagen, daß in dem schwebestoffbeladenen Fluidstrom unterhalb seiner Oberfläche durch gezielte Ab- bzw. Umlenkung der Strömung eine Verwirbelungszone geschaffen wird, die nur schweren und trägen Schwebeteilchen die Beibehaltung ihrer Strömungsbahn ermöglicht und einen weitgehend strömungs- und verwirbelungsfreien Raum umschließt, in den kontinuierlich ein sich aus den leichteren Molekülen zusammensetzender und somit gereinigter Teil-Fluidstrom eindringt, um hier gemessen oder aus diesem Raum kontinuierlich entnommen zu werden.

## Beschreibung

Die Erfindung betrifft ein Verfahren sowie eine Vorrichtung zur Trennung von Schwebestoffen in strömenden Fluiden zur Erzeugung eines gereinigten, zumindest schwebestoffarmen Teil-Fluidstroms.

In zahlreichen, insbesondere meßtechnischen Anwendungen ist es erforderlich, strömende Fluide von Verunreinigungen durch Schwebestoffe zu befreien und einen so gereinigten Teil-Fluidstrom z. B. für die Durchführung von Messungen zu entnehmen. Hierfür werden bisher meist Filter aus porösen, textilen oder keramischen Materialien verwendet, die Feststoffe bestimmter Größe ausfiltern und an der Filteroberfläche ablagern. Derartige Filter setzen sich jedoch schnell zu, so daß der das Filter durchströmende Teil-Fluidstrom sich entsprechend schnell verringert. Derartige Filter werden daher rasch unbrauchbar und müssen ausgetauscht, zumindest aber in verhältnismäßig kurzen Abständen gereinigt werden.

Bei anderen bekanntgewordenen Trennverfahren wird die Schwerkraft der Schwebestoffe ausgenutzt zur Trennung der schwereren Teilchen von den leichteren Molekülen des Fluids. Diese Verfahren setzen jedoch ruhende Fluide voraus, so daß aus einem strömenden Fluid zuerst eine bestimmte Menge abgeschöpft und in Ruhestellung gebracht werden muß, um ein Absinken der Schwebeteilchen abzuwarten. Eine kontinuierliche Entnahme von gereinigtem Fluid ist somit nicht möglich.

Der Erfindung liegt die Aufgabe zugrunde, ein Verfahren sowie eine Vorrichtung zu entwickeln, mit denen eine Möglichkeit geschaffen wird, aus einem durch Schwebestoffe verunreinigten Fluidstrom kontinuierlich einen schwebestoffarmen Teil-Fluidstrom abzutrennen.

Diese Aufgabe wird für das eingangs genannte Verfahren erfindungsgemäß dadurch gelöst, daß in dem schwebestoffbeladenen Fluidstrom unterhalb seiner Oberfläche durch gezielte Ab- bzw. Umlenkung der Strömung eine Verwirbelungszone geschaffen wird, die nur schweren und trägen Schwebeteilchen die Beibehaltung ihrer Strömungsbahn ermöglicht und einen weitgehend strömungs- und verwirbelungsfreien Raum umschließt, in den kontinuierlich ein sich aus den leichteren Molekülen zusammensetzender und somit gereinigter Teil-Fluidstrom eindringt, um hier gemessen oder aus diesem Raum kontinuierlich entnommen zu werden.

Hinsichtlich der eingangs genannten Vorrichtung wird die der Erfindung zugrundeliegende Aufgabe gelöst, durch einen innerhalb des schwebestoffbeladenen Fluidstromes und unterhalb seiner Oberfläche zu plazierender Strömungskörper, der einen hohlen, mit zumindest einer Fluid-Austritts- bzw. -Entnahmeöffnung verbundenen Innenraum, eine der Fluidströmung entgegenzurichtende Anströmseite, eine dieser abgewandte Abströmseite sowie eine die Anströmseite mit der Abströmseite verbindende, im wesentlichen glatt ausgebildete Strömungswandung aufweist, die in dem vor der Abströmseite liegenden Wandungsbereich mit den Strömungskörper zumindest teilweise umschließenden Lamellen bestückt ist, die voneinander einen in Längsrichtung des Strömungskörpers gesehen lichten Abstand aufweisen, wo in der Wandung des Strömungskörpers in dessen Innenraum mündende Einströmöffnungen angeordnet sind.

Das erfindungsgemäße Verfahren gibt ebenso wie die vorstehend zitierte erfindungsgemäße Vorrichtung die Möglichkeit, aus einem schwebestoffbeladenen Fluidstrom kontinuierlich einen hinsichtlich der Schwebestoffe weitgehend gereinigten Teil-Fluidstrom abzuziehen, um diesen z. B. meßtechnisch zu untersuchen. Dabei besteht ein wesentliches Erfindungsmerkmale in der gezielten Erzeugung von Strömungsverwirbelungen derart, daß sich aus der Hauptströmungsrichtung des schwebestoffbeladenen Fluidstroms die leichteren Moleküle kontinuierlich abscheiden und in den genannten Sammelraum strömen, wo dieser weitgehend von Schwebeteilchen gereinigte Teil-Fluidstrom unmittelbar meßtechnisch untersucht werden kann, oder aber von wo dieser Teilstrom zu meßtechnischen Untersuchungen außerhalb des Hauptstromes abgezogen werden kann.

Bei der konstruktiven Lösung kann ein gänzlich freier Innenraum des Strömungskörpers vorgesehen werden; dieser Innenraum dient dann zum Sammeln bzw. Zwischenspeichern des schwebestoffarmen Teil-Fluidstromes, für den im übrigen eine Ausströmmöglichkeit aus dem Innenraum vorgesehen ist. Insbesondere bei dieser Lösung lassen sich Messungen unmittelbar im Innenraum vornehmen. Im Innenraum des Strömungskörpers kann aber auch eine Einrichtung zum Filtern und/oder Fördern installiert sein.

Um eine kontrollierte Hauptströmung vor dem Verwirbelungsbereich sicherzustellen, ist es zweckmäßig, wenn der Strömungskörper als Rotationskörper mit in Strömungsrichtung auszurichtender Rotationsachse ausgebildet ist.

Der erfindungsgemäß ausgenutzte Trenneffekt der leichteren Moleküle von den schwereren Schwebestoffen ist dann besonders effizient, wenn die Lamellen jeweils als geschlossene Ringlamellen ausgebildet sind und sich über ihre radiale Höhe jeweils zur Abströmseite des Strömungskörpers hin neigen.

Da auch bei der erfindungsgemäßen Vorrichtung naturgemäß keine 100 %ige Reinigung des abgezweigten Teil-Fluidstroms erreichbar ist, lassen sich insbesondere über längere Betriebszeiten Ablagerungen im Innenraum des Strömungskörpers nicht vermeiden. Es ist deshalb zweckmäßig, wenn der Innenraum des Strömungskörpers einen Anschluß für eine Spüleinrichtung aufweist.

Für die einwandfreie Funktion des erfindungsgemäßen Strömungskörpers ist dessen exakte Positionierung innerhalb der Fluidströmung Voraussetzung. Hierfür ist es vorteilhaft, wenn der Strömungskörper auf seiner Außenwandung Stabilisierungsflossen oder dergleichen aufweist, die z. B. als lotrecht nach unten ragendes Schwert und/oder horizontale Stabilisierungsflügel ausgebildet sein können. Ebenfalls zur Positionierung des Strömungskörpers ist es vorteilhaft, wenn dieser eine Aufhängung aufweist, die vorzugsweise über die Länge des Strömungskörpers mehrere Aufhängepunkte hat. Unter Berücksichtigung der jeweiligen Strömungsverhältnisse werden dann diejenigen Aufhängepunkte zur Befestigung der Leinen oder dergleichen verwendet, die eine dauerhafte Positionierung des Strömungskörpers in der Fluidströmung derart sicherstellen, daß die Rotationsachse des Strömungskörpers zumindest angenähert horizontal innerhalb der Strömungsrichtung liegt.

Die Leinen zur Halterung des Strömungskörpers können am Boden des Strömungsbettes verankert oder aber an ihrerseits verankerten Bojen oder an festen Landmarken befestigt werden.

Um den Strömungskörper insbesondere auch bei zeitweisem Ausfall oder starker Verringerung der Strömungsgeschwindigkeit des Fluidstroms in stabilisierter Lage zu halten, kann es zweckmäßig sein, wenn der Strömungskörper an einem Schwimmkörper befestigt, vorzugsweise hängend befestigt ist.

Weitere Merkmale der Erfindung sind Gegenstand der Unteransprüche und werden in Verbindung mit weiteren Vorteilen der Erfindung anhand von Ausführungsbelspielen näher erläutert.

In der Zeichnung sind einige als Beispiele dienende Ausführungsformen der Erfindung schematisch dargestellt. Es zeigen:
- **Figur 1 -**: eine Trennvorrichtung in Seitenansicht;
- **Figur 2 -**: das in **Figur 1** linke Ende der Trennvorrichtung in Stirnansicht;
- **Figur 3 -**: die Trennvorrichtung gemäß **Figur 1** im Längsschnitt und angeordnet innerhalb eines Fluidstromes;
- **Figur 4 -**: eine abgewandelte Ausführungsform in einer Darstellung gemäß **Figur 1**;
- **Figur 5 -**: das in **Figur 4** linke Ende der Trennvorrichtung in Stirnansicht;
- **Figur 6 -**: eine abgewandelte Ausführungsform in einer Darstellung gemäß den **Figuren 1 und 4** und
- **Figur 7 -**: das in **Figur 6** linke Ende der Vorrichtung in Stirnansicht.

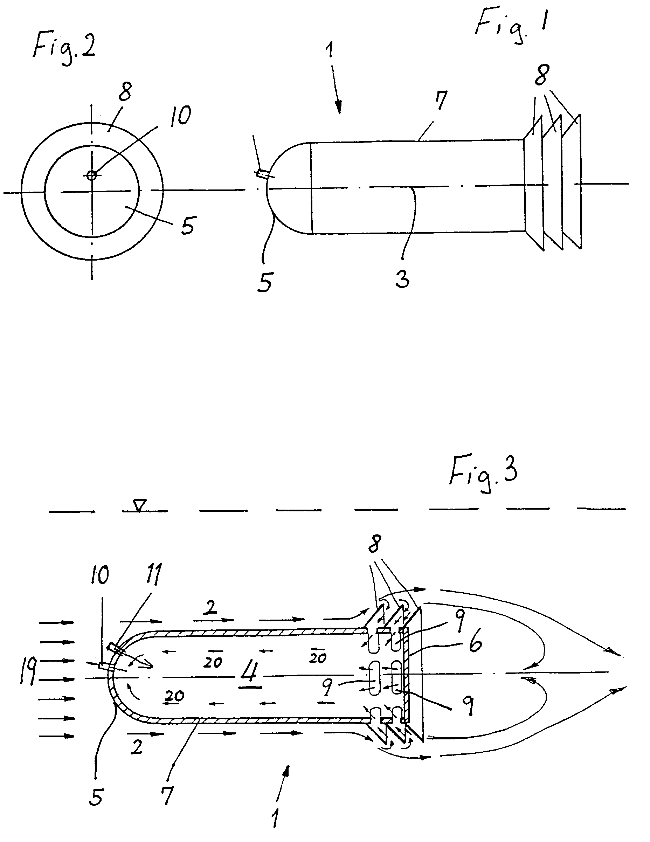

Die Figuren 1 bis 3 zeigen eine Vorrichtung zur Trennung von Schwebestoffen in strömenden Fluiden zur Erzeugung eines gereinigten, zumindest schwebestoffarmen Teil-Fluidstroms (nachfolgend "Trennvorrichtung" genannt). Diese Trennvorrichtung wird in erster Linie gebildet durch einen Strömungskörper 1, der als Rotationskörper mit in Strömungsrichtung 2 auszurichtender Rotationsachse 3 ausgebildet ist.

Der Strömungskörper 1 weist einen hohlen Innenraum 4, eine der Fluidströmung 2 entgegenzurichtende Anströmseite 5, eine dieser abgewandte Abströmseite 6 sowie eine die Anströmseite 5 mit der Abströmseite 6 verbindende, im wesentlichen glatt ausgebildete Strömungswandung 7 auf. Letztere ist in den vor der Abströmseite 6 liegenden Wandungsbereich mit Lamellen 8 bestückt, die jeweils als geschlossene Ringlamellen ausgebildet sind, den Strömungskörper 1 ringförmig umschließen, über ihre radiale Höhe zur Abströmseite 6 hin geneigt sind und voneinander einen in Längsrichtung des Strömungskörpers 1 gesehen lichten Abstand aufweisen. In diesem Abstandsbereich sind in der Wandung des Strömungskörpers 1 jeweils in dessen Innenraum 4 mündende Einströmöffnungen 9 angeordnet.

Die Anströmseite 5 des Strömungskörpers 1 ist annähernd halbkugelförmig ausgebildet, während die Abströmseite 6 plan ausgebildet ist. Der Innenraum 4 des Strömungskörpers 1 ist mit zumindest einer Fluid-Austritts- bzw. -Entnahmeöffnung 10 verbunden und weist ferner einen Anschluß 11 für eine nicht näher dargestellte Spüleinrichtung auf (siehe Figur 3).

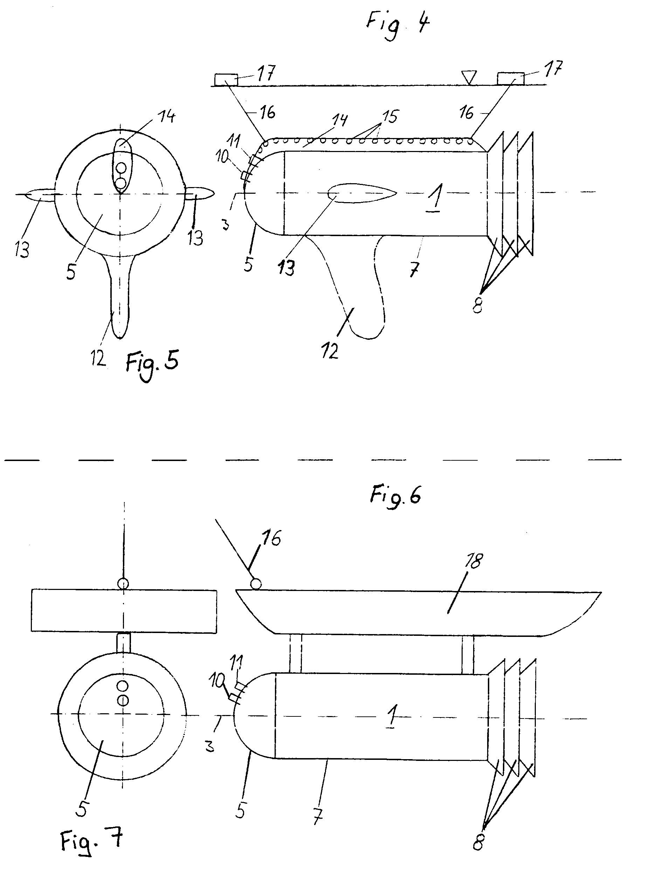

Gemäß der in den Figuren 4 und 5 dargestellten abgewandelten Ausführungsform ist der Strömungskörper 1 zu seiner Positionierung in dem Fluidstrom auf seiner Außenwandung mit Stabilisierungsflossen 12,13 versehen, von denen die untere 12 durch ein Schwert gebildet ist, während die beiden anderen Stabilisierungsflossen 13 horizontal ausgerichtete Flügel sind.

Außerdem weist der Strömungskörper 1 eine Aufhängung 14 auf, die mit mehreren Aufhängepunkten 15 versehen ist, an denen der Strömungskörper 1 über Leinen 16 oder dergleichen an Bojen 17 oder dergleichen befestigt werden kann. Die verschiedenen Aufhängepunkte 15 geben dabei die Möglichkeit, den Strömungskörper 1 entsprechend den jeweiligen Strömungsverhältnissen so innerhalb des Fluidstromes zu halten, daß seine Rotationsachse 3 angenähert horizontal und zumindest angenähert in Strömungsrichtung 2 verharrt.

Gemäß einer weiterhin abgewandelten, in den Figuren 6 und 7 dargestellten Ausführungsform kann der Strömungskörper 1 an einem Schwimmkörper 18 befestigt sein, wobei vorzugsweise eine hängende Befestigung gewählt wird. Dieser Schwimmkörper 18 kann ebenfalls zur exakten Positionierung des Strömungskörpers 1 herangezogen werden und hält letzteren innerhalb des zu reinigenden Fluids auch dann, wenn die Fluidströmung kurzfristig ausbleibt.

Figur 3 läßt die Wirkungsweise der Trennvorrichtung erkennen: Die links übereinander eingezeichneten Pfeile symbolisieren den schwebestoffbeladenen Fluidstrom 19, dessen Strömungsrichtung 2 durch die weiteren, parallel zur Rotationsachse 3 des Strömungskörpers 1 eingezeichneten Pfeile gekennzeichnet ist. Demnach legt sich die Strömung zuerst an die Strömungswandung 7 des Strömungskörpers 1 an, bis sie auf die erste der Lamellen 8 trifft und von dieser - bezogen auf den Strömungskörper 1 - radial nach außen abgelenkt wird. Bei der nachfolgenden Umströmung der Lamellen 8 behalten die schweren und trägen Schwebeteilchen ihre Bewegungsbahn weitgehend bei, strömen also an den Lamellen vorbei, während die leichteren Moleküle aufgrund im Bereich der Lamellen entstehender Wirbelströmungen zwischen die Lamellen 8 getrieben werden, von wo sie durch die Eintrittsöffnungen 9 in den Innenraum 4 des Strömungskörpers 1 gelangen. Der auf diese Weise kontinuierlich in den Innenraum 4 eintretende gereinigte Teil-Fluidstrom (siehe die Pfeile 20 in Figur 3) kann entweder unmittelbar im Innenraum 4 gemessen, oder aber z. B. über eine Pumpe aus dem Innenraum 4 durch die Fluid-Austritts- bzw. Entnahmeöffnung 10 nach oben gefördert und dort untersucht werden. Es besteht aber auch die Möglichkeit, den aus dem Innenraum 4 abzupumpenden Teil-Fluidstrom zuvor im Innenraum 4 zusätzlich zu filtern.

## Patentansprüche

1. Verfahren zur Trennung von Schwebestoffen in strömenden Fluiden zur Erzeugung eines gereinigten, zumindest schwebestoffarmen Teil-Fluidstroms, **dadurch gekennzeichnet**, daß in dem schwebestoffbeladenen Fluidstrom unterhalb seiner Oberfläche durch gezielte Ab- bzw. Umlenkung der Strömung eine Verwirbelungszone geschaffen wird, die nur schweren und trägen Schwebeteilchen die Beibehaltung ihrer Strömungsbahn ermöglicht und einen weitgehend strömungs- und verwirbelungsfreien Raum umschließt, in den kontinuierlich ein sich aus den leichteren Molekülen zusammensetzender und somit gereinigter Teil-Fluidstrom eindringt, um hier gemessen oder aus diesem Raum kontinuierlich entnommen zu werden.

2. Vorrichtung zur Trennung von Schwebestoffen in strömenden Fluiden zur Erzeugung eines gereinigten, zumindest schwebestoffarmen Teil-Fluidstroms, insbesondere zur Durchführung des Verfahrens nach Anspruch 1, **gekennzeichnet durch** einen innerhalb des schwebestoffbeladenen Fluidstromes (19) und unterhalb seiner Oberfläche zu plazierenden Strömungskörper (1), der einen hohlen, mit zumindest einer Fluid-Austritts- bzw. -Entnahmeöffnung (10) verbundenen Innenraum (4), eine der Fluidströmung (2) entgegenzurichtende Anströmseite (5), eine dieser abgewandte Abströmseite (6) sowie eine die Anströmseite (5) mit der Abströmseite (6) verbindende, im wesentlichen glatt ausgebildete Strömungswandung (7) aufweist, die in dem vor der Abströmseite (6) liegenden Wandungsbereich mit den Strömungskörper (1) zumindest teilweise umschließenden Lamellen (8) bestückt ist, die voneinander einen in Längsrichtung des Strömungskörpers (1) gesehen lichten Abstand aufweisen, wo in der Wandung des Strömungskörpers (1) in dessen Innenraum (4) mündende Einströmöffnungen (9) angeordnet sind.

3. Vorrichtung nach Anspruch 2, **dadurch gekennzeichnet**, daß der Strömungskörper (1) als Rotationskörper mit in Strömungsrichtung (2) auszurichtender Rotationsachse (3) ausgebildet ist.

4. Vorrichtung nach Anspruch 2 oder 3, **dadurch gekennzeich**net, daß die Lamellen (8) jeweils als geschlossene Ringlamellen ausgebildet sind.

5. Vorrichtung nach Anspruch 2, 3 oder 4, **dadurch gekennzeichnet**, daß jede Lamelle (8) über ihre radiale Höhe zur Abströmseite (6) des Strömungskörpers (1) hin geneigt ist.

6. Vorrichtung nach einem der Ansprüche 2 bis 5, **dadurch gekennzeichnet**, daß die Anströmseite (5) des Strömungskörpers (1) annähernd halbkugelförmig ausgebildet ist.

7. Vorrichtung nach einem der Ansprüche 2 bis 6, **dadurch gekennzeichnet**, daß die Abströmseite (6) des Strömungskörpers (1) plan ausgebildet ist.

8. Vorrichtung nach einem der Ansprüche 2 bis 7, **dadurch gekennzeichnet**, daß im Innenraum (4) des Strömungskörpers (1) eine Einrichtung zum Filtern, Fördern und/oder oder Messen installiert ist.

9. Vorrichtung nach einem der Ansprüche 2 bis 8, **dadurch gekennzeichnet**, daß der Innenraum (4) des Strömungskörpers (1) einen Anschluß (11) für eine Spüleinrichtung aufweist.

10. Vorrichtung nach einem der Ansprüche 2 bis 9, **dadurch gekennzeichnet**, daß der Strömungskörper (1) zu seiner Positionierung im Fluidstrom (19) auf seiner Außenwandung Stabilisierungsflossen (12,13) oder dergleichen aufweist.

11. Vorrichtung nach einem der Ansprüche 2 bis 10, **dadurch gekennzeichnet**, daß der Strömungskörper (1) eine Aufhängung (14) aufweist.

12. Vorrichtung nach Anspruch 11, **dadurch gekennzeichnet**, daß die Aufhängung (14) über die Länge des Strömungskörpers (1) mehrere Aufhängepunkte (15) aufweist.

13. Vorrichtung nach einem der Ansprüche 2 bis 12, **dadurch gekennzeichnet**, daß der Strömungskörper (1) an einem Schwimmkörper (18) befestigt ist.
